# EUROPEAN PATENT APPLICATION

(11) **EP 3 440 927 A1**
(43) Date of publication of application: **13.02.2019**
(21) Application number: 18187488.4
(22) Date of filing: 06.08.2018
(51) Int. Cl.: A01K 1/00, A01K 1/02, F24F 1/02

(54) **A PORTABLE COOLING SYSTEM**

(30) Priority: 08.08.2017 FI 20175715
(71) Applicant: IV-Aalto Oy, 04430 Järvenpää (FI)
(72) Inventor: Sydänheimo, Ville, 04430 Järvenpää (FI)
(74) Representative: Boco IP Oy Ab

(57) **Abstract**

The present invention relates to a portable cooling system configured for controlling temperature in a semi-closed animal enclosure (1), and a method for operating such system. The portable cooling system comprises a cooling device (10) including a micro-compressor, the cooling device (10) configured to adjust temperature within the enclosure. The portable cooling system comprises at least one fan and at least one temperature sensor (30) configured to detect current temperature within the semi-closed animal enclosure (1). The portable cooling system comprises a processing device (150, 20) configured to control the operation of the micro-compressor based on a comparison between the current temperature and at least one set target temperature value (T1) and at least one wireless transceiver (50) configured to provide wireless communication between the processing device (150, 20) and a remote wireless device (150). The portable cooling system comprises at least one dedicated energy source configured to provide energy only to the portable cooling system for running the micro-compressor, the at least one fan, the at least one temperature sensor (30), the processing device (150, 20) and the at least one wireless transceiver.

## Description

### Field

The present invention relates to a method and a system related to cooling and supervision thereof. More particularly, the invention relates to a portable cooling system configured for controlling temperature in a semi-closed animal enclosure and a method of operating a portable cooling system.

### Background

It is a well-known hazard that temperatures in a parked car may rise to very high temperatures, and there is a severe risk of anyone remaining in a closed car to swelter or even die due to excess heat.

There are, however, occasions, when it would be preferable to have for example an animal in a closed enclosure and even to leave the animal in a vehicle such as a car. One example of animals in such situation is a working dog, such as a police dog, a rescue dog or a customs dog, who may need to stay closed in a cage or crate within the vehicle until their services are required. Another example may occur in an animal show situation, such as a dog show or a cat show. While the owners are concerned about welfare of their animal companions or pets, a solution may be to leave the engine of the vehicle running, so that it is possible to maintain the air-conditioning system of the vehicle operational. This is, however, an environmentally bad choice, while the idle vehicle continuously produces pollution in the air. For example, in a dog show, there may be hundreds of cars tensely parked, and the air quality would soon deteriorate. Even if it would be possible to have the engine running, the battery of a vehicle is typically not charged when idle. Thus, when the time period of having a stationary vehicle air-condition on extends, there is also a risk exhausting the battery of the vehicle. Further, it is unnecessary to cool the entire interior volume of the vehicle, while only the temperature in the part of the volume where the animal resides will need to be controlled. It is apparent that air-conditioning the entire vehicle thus wastes energy.

Another case is a pet show, a dog show, an agility competition or like, where animals are required to be kept locked in a cage when not under direct supervision or performing on their turn. Temperature in a cage may also rise for example due to sun shine so that the temperature within the cage becomes uncomfortable or even hazardous.

Further, while the animal in a cage may remain without immediate supervision for time periods of varying length, there should be a method to supervise the temperature in the vehicle remotely for detecting any problems or hazards due to rising temperature or incapability to maintain the temperature in the wanted level.

A solution is therefore needed to solve at least the above problems.

### Description of the related art

Several solutions are known to supervise temperature in a car. For example, international patent application WO16149746 discloses a vehicle safety system, which is provided for preventing heat related injuries in hot cars. A controller controls temperature in the vehicle. An alert may be issued in response to detection presence of a child or animal in the vehicle, and temperature is changed by activating fan or air-conditioning, or opening or closing a window of the vehicle.

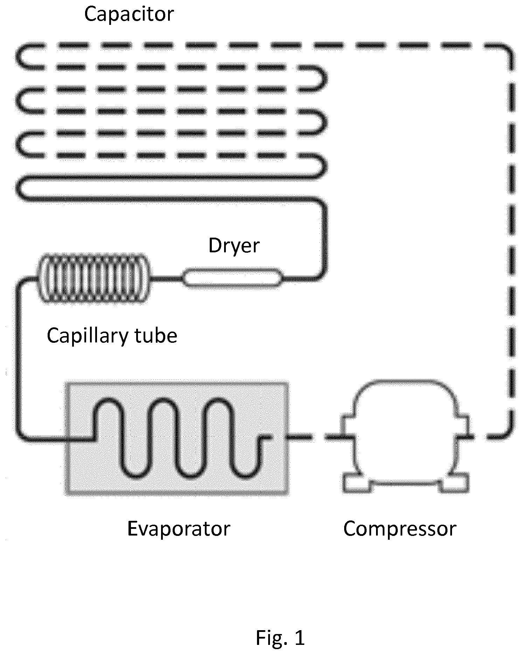

Figure 1 illustrates the known principle of compression type cooling action used commonly for example in refrigerators. A compressor sucks in low temperature and/or low pressure gaseous refrigerant and compresses it into high temperature and pressure. Gaseous refrigerant is illustrated in figure 1 with a dashed line, while a liquid refrigerant is illustrated with a solid line. The capacitor, also known as a condenser, liquefies the high temperature and/or high-pressure gas through heat emission, and the liquified cooler running through a capillary tube and a dryer is decompressed in an isenthalpic process. The partially vaporized refrigerant is lead into an evaporator, in which the refrigerant is evaporated by warm air that a fan circulates across the evaporator. This process causes the out blowing air to become cool, since the evaporation process requires energy.

### Summary

An object is to provide a method and apparatus so as to solve the problem of cooling and supervising the cooling of a semi-closed animal enclosure. The objects of the present invention are achieved with a system according to the characterizing portion of claim 1. The objects of the present invention are further achieved with a method according to the characterizing portion of claim 11.

The preferred embodiments of the invention are disclosed in the dependent claims.

According to a first aspect, a portable cooling system is provided which is configured for controlling temperature in a semi-closed animal enclosure. The portable cooling system comprises a cooling device including a micro-compressor. The cooling device is configured to adjust temperature within the enclosure. The system comprises at least one fan and at least one temperature sensor configured to detect current temperature within the semi-closed animal enclosure. The system comprises a processing device configured to control the operation of the micro-compressor based on a comparison of the current temperature and at least one set target temperature value. The system comprises at least one wireless transceiver configured to provide wireless communication between the processing device and a remote wireless device. The system comprises at least one dedicated energy source configured to provide energy only to the portable cooling system for running the micro-compressor, the at least one fan, the at least one temperature sensor, the processing device and the at least one wireless transceiver. The at least one dedicated energy source comprise a battery. The processing device is further configured to supervise the battery. The supervising the battery comprises at least one of obtaining information of a charge level of the battery, providing the obtained charge level to be displayed in a user interface, issuing a charge level alert, when the obtained charge level of the battery falls below a set charge level limit value, and providing an estimate of operation functional time based on the obtained charge level.

According to a second aspect, the at least one energy source further comprises a solar panel.

According to a third aspect, the processing device is further configured to adjust at least one target temperature value into a predefined maximum target temperature value in response to detecting the obtained charge level to fall below the set charge level limit value.

According to a fourth aspect, the processing device is further configured to supervise the temperature within the enclosure, wherein the supervising the temperature comprises at least one of providing information of the current temperature detected by the temperature sensor to the remote wireless device and issuing a temperature alert to the remote wireless device, when the detected current temperature rises above a set temperature limit value.

According to a fifth aspect, the portable cooling system is configured to be removably installed to the structure of a semi-closed animal enclosure.

According to a sixth aspect, the semi-closed animal enclosure is configured to be disposed inside a vehicle, and the portable cooling system further comprises at least one first tube coupled to a first outlet of the portable cooling system and configured to transport heat away from the vehicle, wherein the first outlet comprises a first fan configured to push warm air coming out from the first outlet into the at least one first tube.

According to a seventh aspect, the portable cooling system further comprises at least one second tube coupled to a second outlet the portable cooling system, wherein the second outlet comprises a second fan configured to push cool air into the at least one second tube, and wherein the at least one second tube is configured to lead the cool air into the semi-closed animal enclosure.

According to an eighth aspect, the portable cooling system further comprises an AC power input configured to be plugged to the mains and an AC DC converter.

According to a first method aspect, a method for operating a portable cooling system is provided. The portable cooling system is configured for controlling temperature in a semi-closed animal enclosure. The method comprises adjusting temperature within the enclosure with a cooling device including a micro-compressor, moving air with at least one fan, detecting temperature within the enclosure with at least one temperature sensor, controlling the operation of the micro-compressor based on comparison of the detected temperature and at least one set target temperature value, communicating wirelessly between the processing device and a remote wireless device, and providing energy for running the micro-compressor, the at least one temperature sensor, the at least one fan, the processing device and the at least one wireless transceiver by at least one dedicated energy source configured to provide energy only to the portable cooling system. The at least one dedicated energy source comprises a battery. The method further comprises supervising the battery. The supervising the battery comprises at least one of: obtaining information of a charge level of the battery, providing the obtained charge level to be displayed in a user interface, issuing a charge level alert, when the obtained charge level of the battery falls below a set charge level limit value, and providing an estimate of remaining operation time based on the obtained charge level.

According to a second method aspect, the at least one dedicated energy source further comprises a solar panel.

According to a third method aspect, the method further comprises adjusting at least one target temperature value into a predefined maximum target temperature value in response to detecting the obtained charge level falling below the set charge level limit value.

According to a fourth method aspect, the method further comprises supervising the temperature within the enclosure by at least one of: providing information of the current temperature detected by the temperature sensor, and issuing a temperature alert, when the detected current temperature rises above a set temperature limit value.

According to a fifth method aspect, the method further comprises transporting heat away from a first outlet of the portable cooling device by a first fan and at least one first tube, wherein the first fan is configured to push warm air coming out from the first outlet into at least one first tube.

According to a sixth method aspect, the method further comprises leading cool air into the enclosure by a second fan and at least one second tube, wherein the second fan is configured to push cool air coming out from a second outlet of the portable cooling device into the at least one second tube.

The present invention is based on the idea of a portable cooling system which has its own dedicated energy sources. The portable cooling system thus works independently from any power sources of for example a vehicle into which the animal enclosure to be air-conditioned is placed in. The portable cooling system is provided with its own dedicated energy sources, which may include a battery and/or a solar panel. The battery may be, for example, a dedicated, reloadable battery or for example a power bank. The portable cooling system may further include a power inlet for mains power and/or for an auxiliary DC power source. The portable cooling system controls the temperature within the semi-closed animal enclosure, maintaining it at a set temperature value or within set temperature limits. The portable cooling system further communicates wirelessly with a remote wireless device using any suitable communication method. The communicated information may comprise at least information of current temperature and charge level of the battery, and issues alerts for both temperature and charge level, when these are outside pre-set value range or are not within pre-set limits. The portable cooling system is preferably configured to enable remote supervision of the functionality of the cooling system.

The present invention has the advantage that the portable cooling system ensures safety of an animal staying in an animal enclosure, which may reside within a parked or stalled vehicle while not producing any environmental pollution nor consuming the energy sources of the vehicle, thus also ensuring operation of the vehicle even after longer periods of stalling or parking with the portable cooling operational. Since the portable cooling system is equipped with its own dedicated power source(s), the portable cooling system also advantageously works in an environment where no external electrical power sources are available. The portable cooling system is preferably entirely independent of for example power sources of a vehicle in which it may be used. This ensures that the portable cooling system does not exhaust the battery of the vehicle nor consumes fuel of the vehicle. Wireless communication facilitates ease of use and possibility to leave the animal enclosure without immediate attention for a limited period of time without risking the safety of the animals left in the vehicle. The portable cooling system is easily adaptable for cooling any type of limited volume animal enclosure such as a cage or crate, for example a dog/cat crate or dog/cat cage typically utilized in dog shows.

### Brief description of the drawings

In the following the invention will be described in greater detail, in connection with preferred embodiments, with reference to the attached drawings, in which
Figure 1 illustrates the principle of cooling action.
Figure 2 is an illustration of exemplary semi-closed animal enclosures.
Figure 3 illustrates an exemplary animal enclosure equipped with a portable cooling system.
Figure 4 illustrates cooling action by the portable cooling system.
Figure 5 shows an illustration of main active parts of the portable cooling system.
Figure 6 shows an exemplary embodiment of a method to issue temperature alerts.
Figure 7 discloses a method to obtain temperature information and to issue temperature alerts.
Figure 8 illustrates temperature settings and limits.
Figure 9 discloses a method to obtain charge level information and to issue charge level alerts.
Figure 10 illustrates a simplified example block diagram of a processing device.
Figure 11 illustrates a simplified example block diagram of a remote wireless device.

### Detailed description

The following embodiments are exemplary. Although the specification may refer to "an", "one", or "some" embodiment(s), this does not necessarily mean that each such reference is to the same embodiment(s), or that the feature only applies to a single embodiment. Single features of different embodiments may be combined to provide further embodiments.

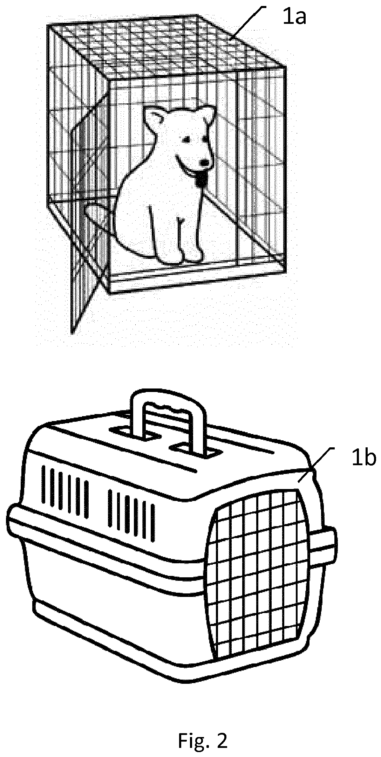

The term semi-closed animal enclosure refers to a limited volume enclosure designed for holding one or more animals, in which an animal may releasably enclosed, but has one or plurality of openings that enable air to circulate between the interior of the enclosure and its surroundings. The semi-closed animal enclosure is preferably a portable or at least movable. Examples of semi-closed animal enclosures are portable or movable cages and crates designed for animals and widely used for example at pet shows. Preferably, the semi-closed animal enclosure dimensions and weight are such that a human may carry the semi-closed animal enclosure. In other words, the semi-enclosed animal enclosure is preferably moveable or transferable, and not intended for fixed installation. The semi-closed animal enclosure preferably comprises metal or plastic grids allowing air to flow essentially freely through the grid parts the outer surface of the enclosure but prohibiting the animal to exit or enter the enclosure without human intervention. The semi-closed enclosure may also comprise closed surfaces which are air impermeable. Figure 2 illustrates two examples of semi-closed animal enclosures, namely a dog cage (1a) and a dog crate (1b). The semi-closed animal enclosure may also comprise a trunk of a station wagon or a van equipped with a pet barrier or one or more dog cages. A semi-closed animal enclosure may alternatively be called semi-open animal enclosure.

Following description discloses an exemplary embodiment, where the semi-closed animal enclosure is represented by a dog cage. It is understood, that a semi-closed animal enclosure may be placed in a vehicle such as a car, a van, a truck or a boat. The volume of the semi-closed animal enclosure is preferably less than the volume of the interior or the vehicle. The portable cooling system may be used with any other type of semi-closed animal enclosure, where an animal may be held without immediate supervision for a maximum duration of few hours. Covering at parts of a mainly grid surfaced cage with a cloth or with impermeable material may be preferable to reduce the flow of air between inside of the cage and outside, thus limiting the volume of air to be air-conditioned by the portable cooling system and to improve effectiveness of the cooling in the wanted air volume within the cage. For example, a cloth or a piece of textile, plastic or cardboard may be placed on one, two or three sides of an otherwise open net or bar structured cage.

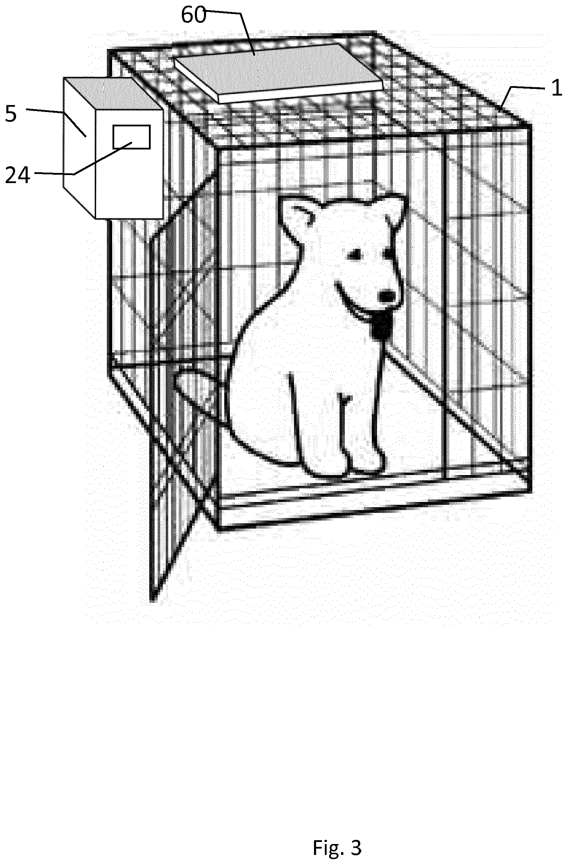

Figure 3 shows an illustration of an exemplary dog cage (1) equipped with a portable cooling system according to the invention. The portable cooling system may comprise one or more physical parts coupled with each other through interfaces. In figure 3, we can see an optional solar panel (60) connected electrically (not shown) to the main unit (5). The main unit (5) comprises the functional parts of the portable cooling system which will be disclosed below. The main unit preferably comprises a user interface 24.

The portable cooling system may be installed either outside the dog cage or inside the dog cage. Preferably, the portable cooling system is enclosed within a metal frame protecting the functional parts from being accessed and/or harmed by the animal even if the system resides inside the enclosure with the animal. The metal frame may comprise a box shaped frame made for example out of aluminum, which is lightweight yet hard enough to protect the functional parts enclosed within the frame. The frame has one or more openings configured to allow cool air to flow towards the inside of the animal enclosure while removing excess heat away from the animal enclosure. The openings may be equipped with one or more fans for facilitating effective air flow.

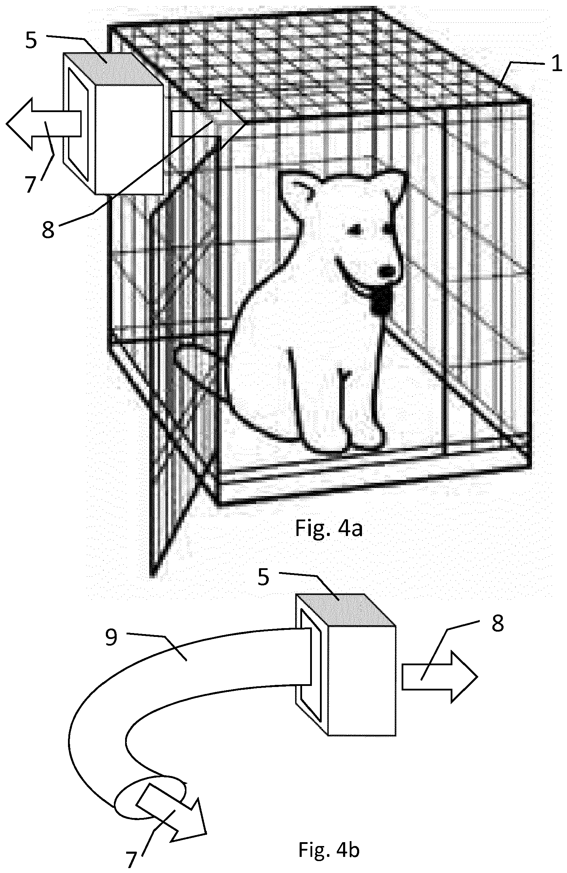

Figures 4a and 4b illustrate the cooling action achieved by the portable cooling system. The body 5 of the portable cooling system comprises a cooling device and one or more fans, and the cooling device actively transfers heat towards the outside of the animal enclosure 1 as illustrated with the outward arrow 7 and actively provides cool air towards the inside of the animal enclosure 1 as illustrated with the inward arrow 8. When the animal enclosure 1 is disposed for example within a car, the efficiency of the cooling may be improved by installing a tube 9 for transporting the removed heat for instance through a window opening as illustrated in figure 4b, so that the heat removed from the animal enclosure by the cooling device does not increase the temperature within the car outside the animal enclosure. For facilitating flow of warm or hot air into the tube 9, the hot/warm air outlet of the cooling device is preferably equipped with a fan, which pushes air into and through the tube 9. By leading excess heat out of the vehicle through the tube, the temperature difference between the car interior and the animal enclosure is reduced, thus reducing the amount of power required to maintain the wanted temperature within the animal enclosure.

Like leading heat away in form of warm or hot air, the portable cooling system may comprise one or more tubes configured to lead cool air for cooling action. For this, one or more tubes may be coupled to an outlet of cool air. Preferably, a fan disposed at the cool air outlet of the portable cooling device facilitates flow of cool air through the one or more tubes. Further, the outcoming cool air may be lead to different locations by using at least two tubes. Such tubing may for example allow dividing the cooled air into more than one animal enclosure from a single portable cooling system.

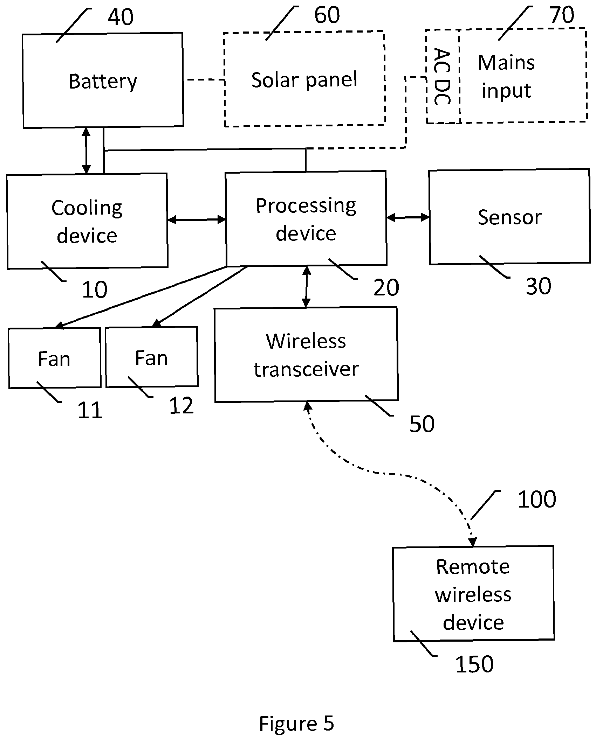

Figure 5 shows an illustration of main active parts of the portable cooling system. A cooling device 10 performs cooling action as known in the art, and the operation of the cooling device 10 is controlled by a computer program product running on a processing device 20 based on temperature information obtained from at least one temperature sensor 30 over an interface. The cooling device 10 preferably comprises a micro-compressor and the operation of the cooling device 10 and the fans 11, 12 may be implemented by controlling the operation of the micro-compressor, for instance switching it and the fans 11, 12 on and off as needed. The interface between the processing device 20 and the temperature sensor 30 may be wired or wireless. In case a wireless interface is applied, the temperature sensor 30 is preferably further equipped with an electrical energy source such as a battery, and a wireless transceiver or transmitter. A wired interface allows the temperature sensor 30 to be provided with energy needed to run the temperature sensor 30 over the wired interface. The temperature sensor 30 is preferably configured to be installed within the enclosure to be air-conditioned. For this purpose, a wired temperature sensor 30 is may be disposed on an outer surface of the portable cooling system body 5 configured to be installed towards the interior of the animal enclosure, or the wired temperature sensor may be coupled to the portable cooling system body 5 with a wire long enough to allow disposing the temperature sensor within the volume of the enclosure even if the rest of the portable cooling system is installed or placed outside the enclosure. The processing device may comprise or may be coupled to a user interface comprising input and/or output means. For example, the processing device 20 may comprise a display for displaying the current temperature. A simple, reliable and energy efficient display may be implemented with a liquid crystal display LCD. The processing device 20 may also comprise input means, such as pushbuttons or a keyboard. The input and output means may also be implemented as a touch sensitive display enabling both input and output. The user interface may be utilized for setting the target temperature(s) and/or one or more temperature and charge alert limits. The input means of the controller device may also enable resetting an alert manually. The user interface may also comprise audio generating devices such as loudspeakers.

The portable cooling system preferably comprises one or more fans 11, 12. The fans 11, 12 may be configured to improve air flow through the evaporator of the cooling device 10 and/or to improve the cool air flow into the animal enclosure 1.

Both the processing device 20 and the cooling device 10 receive power from an electrical power source. Preferably, the power source is a battery 40 that provides DC current. Alternatively, or in addition to the battery 40, a solar panel 60 may be provided. The solar panel 60 may be configured to supply DC current directly to the cooling device 10 and/or the processing device 20 and/or the fans 11, 12, or the solar panel 60 may be configured to charge the battery 40. The portable cooling system may further comprise a mains input 70 as a power supply towards the cooling device 10, the processing device 20 and to the fans 11, 12. While the cooling device 10, the processing device 20 and the fans 11, 12 are preferably operated by DC current, an AC DC converter is preferably provided for converting the mains AC current into a DC current suitable to be supplied to the micro-compressor 10 and the processing device 20 as known in the art. The mains input 70 may further be configured to charge the battery 40, when the battery is not fully charged, as known in the art. The portable cooling system may further comprise an auxiliary DC voltage input.

The processing device 20 comprises or is coupled to at least one wireless transceiver 50 capable of transmitting data provided by the processing device 20 over a wireless communication interface 100 to a remote wireless device 150. The at least one wireless transceiver 50 may provide any known wireless communication interface 100, such as for example a cellular phone interface, a Bluetooth interface or a Wireless Local Area Network (WLAN) interface.

The micro-compressor used in the cooling device 10 is preferably a DC-powered device. For example, Danfoss® DC micro-compressor 109Z0200 provides sufficient cooling efficiency for a cage or even an entire station wagon trunk utilized as animal cage with power consumption level that can be supplied with a 20 Ah battery providing a 12V input voltage, so that the portable cooling system has 4 to 6 hours practical operating time depending on the ambient and wanted temperature levels. On the other hand, a clearly smaller micro-compressor may provide sufficient cooling power for a smaller crate. The size and the capacity of the battery may vary depending on the wanted operation time of the portable cooling system and the power needs of the system.

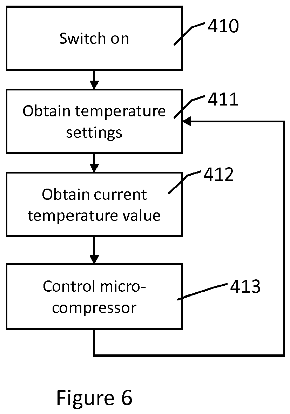

Figures 6, 7 and 9 represent exemplary methods. These methods are preferably performed by the processing device, but parts of the method may also be performed by the remote wireless device. The method may be performed by a Central Processing Unit CPU of the processing device when it executes computer program code stored in a memory of the processing device.

Figure 6 presents an exemplary method for controlling the temperature in the enclosure by the portable cooling system. After switching on in phase 410, the temperature settings are obtained in phase 411. Temperature settings preferably comprise at least a wanted temperature, which may be defined by a single temperature value or by upper and lower limits of the wanted temperature range. Further, the temperature settings may comprise one or more temperature alert limits. The temperature settings may be obtained by reading them from a memory in which the temperature settings have been stored earlier, or the temperature settings may be received through a user interface, after which they are preferably stored in a memory. Temperature control may a continuous process, which involves obtaining the temperature settings in phase 411, obtaining a current temperature value as detected by the temperature sensor in phase 412 and controlling the operation of the micro-compressor in phase 413 for adjusting the temperature based on comparison between the temperature settings and the obtained current temperature value accordingly in effort to maintain the temperature at the wanted temperature value or within the wanted temperature range. The controlling process may be performed continuously. Alternatively, the temperature controlling steps may be performed periodically, for example once in a predefined time period, which time period may anything from a fraction of a second to up to few minutes, for example 5 minutes.

Preferably, there is a predefined upper limit for the maximum temperature value setting a user may choose. The upper limit, which may be referred to as a preset maximum temperature value, may be for example 25°C, which is a typical recommended maximum temperature for dogs, recommended by veterinarians.

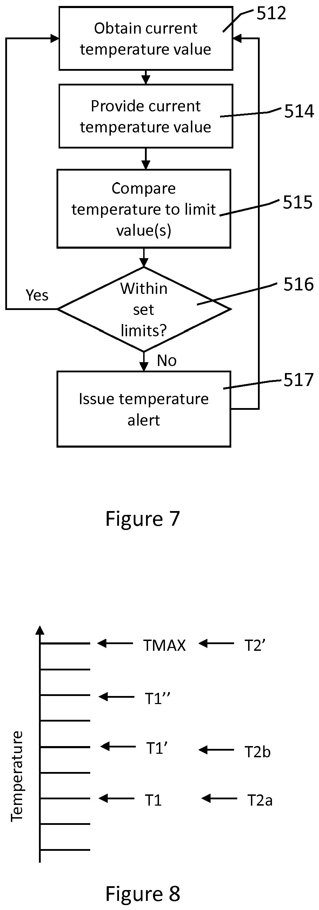

Figure 7 discloses a method to obtain temperature information and to issue temperature alerts based on the obtained current temperature value. The current temperature value is obtained in phase 512. This phase may be common with the method disclosed in figure 6. In phase 514 the obtained current temperature value may be provided to the UI for displaying the current temperature at the UI of the main unit. Further, the current temperature value may be provided towards the remote wireless device by sending it over the wireless interface, so that the charge level may then be displayed at the UI of the remote wireless device. In phase 515 the obtained current temperature value is compared to one or more temperature limit values. If, based on the comparison, the current temperature is found to be above a set limit value in phase 516, a temperature alert is issued in phase 517. The temperature alert may be provided to the user in the UI of the main unit and/or in the UI of the remote wireless device. A skilled person understands, that this exemplary process may be modified in various ways. For example, phase 514 may be performed in parallel to comparison of the current temperature with the one or more temperature limit values. Like the controlling process of figure 6, the method of obtaining temperature values and issuing temperature alerts may be performed continuously or periodically. Preferably, the current temperature value is sent over the wireless interface periodically independent on the continuous or periodic nature of the actual temperature control process. The temperature alert is preferable issued immediately after detecting that the current temperature is above or below a set temperature alert limit value. The temperature alert may comprise visual and/or audio alert. The temperature alert may also comprise a haptic signal provided by the remote wireless device.

Figure 8 illustrates examples of temperature settings and temperature alert limits. In a simple case, the user defines a single target temperature value T1. The processing device may automatically set one or more temperature alert limits T1', T1" based on the set target temperature value T1. Preferably these one or more temperature alert limit values are above the set target temperature value. If more than one temperature alert limits are defined, these may have different severity levels. The higher the temperature at the limit, the higher is the severity level. The processing device controls the cooling device so that the temperature remains approximately at the wanted temperature. The detected actual temperature may vary for example within ±1°C or ±2°C of the set target temperature value T1. Only if the temperature rises above the first temperature alert limit T1', a temperature alert is issued. A further temperature alert with higher severity may be issued if a second temperature alert limit T1" is reached or exceeded. Either of the temperature alert limits T1' and T1" may be set equal to the predefined maximum temperature value TMAX, or they may be automatically or manually set to a lower temperature value as shown in figure 8. There may also be an automatic, preset temperature alert whenever the current temperature reaches or exceed the predefined maximum temperature value TMAX.

In an alternative case, also shown in figure 8, the user may manually set two temperature limit values T2a and T2b, which represent upper and lower limits of the wanted temperature. The processing device controls the cooling device so that the temperature remains between these manually set temperature limit values (T2a, T2b). A first temperature alert may be issued if the detected temperature exceeds the upper temperature limit value T2b. A further, higher severity temperature alert may be issued if the detected temperature exceeds a temperature alert limit value T2'. The temperature alert limit T2' may be manually defined or it may be set automatically. The temperature alert limit T2' may be equal or less than the predefined maximum target temperature value TMAX. The highest temperature alert limit should never exceed the predefined maximum target temperature value.

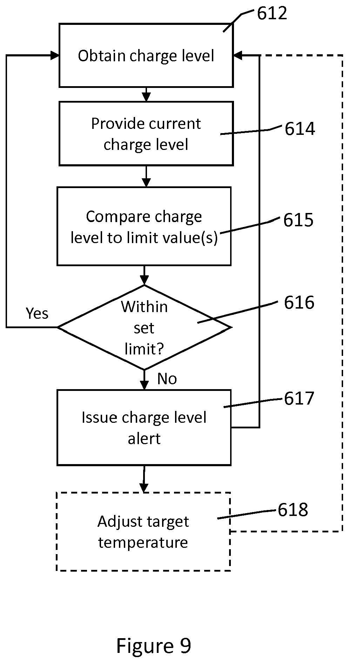

Figure 9 discloses a method to obtain charge level information and to issue charge level alerts. This method is particularly useful for supervising charge level of the battery of the system. The current charge level is obtained in phase 612. In phase 614 the obtained charge level may be provided to be displayed at the UI of the main unit or, by first sending the obtained charge level value over the wireless interface, so that it may then be displayed at the UI of the remote wireless device. In addition to displaying the charge level, the UI may provide indication of estimated remaining operation time for the portable cooling system. This estimate of remaining operation time may be calculated based on current energy consumption and remaining battery energy, in other words the current detected charge level. In phase 615 the obtained charge level value is compared to one or more charge level limit values. For example, a charge level limit value may be 20% of the full charge. If the charge level is found to be below a set charge level limit value in phase 616, a charge level alert is issued in phase 617. The charge level alert may further include an estimate of the remaining operation time until the battery becomes fully exhausted and the cooling device will thus become inoperative. In connection to detecting the charge level falling under the set charge level alert limit, the target temperature value may further be automatically adjusted for extending the battery life as illustrated with the optional phase 618. If the target temperature setting T1 and/or T2b was originally for example 22°C, the target temperature setting may be adjusted to 25°C in the phase 618, which is a common recommended maximum temperature for example for dogs and cats. This adjusted target temperature value preferably equals a predefined maximum target temperature value TMAX. In other words, the set target temperature value or the upper limit of the target temperature range may be increased to the predefined maximum target temperature value, even if this maximum allowed temperature value is higher than the manually set target temperature value or the upper limit of the manually set target temperature range. Such adjustment reduces the temperature difference between the animal enclosure and ambient temperature outside the enclosure and increases the lifetime of the battery by reducing the energy consumption of the portable cooling system without risking the safety of the animals, although the adjusted target temperature may be somewhat less comfortable. If the target temperature is adjusted due to the charge level falling below a set charge level limit value, the estimated operation time may be recalculated based on the estimated energy consumption after adjustment and current charge level, and the recalculated operation time estimate may be provided to be displayed.

A skilled person understands, that this exemplary process may be modified in various ways. For example, phase 614 may be performed in parallel to comparison of the obtained charge level with the one or more charge level limit values. The method of obtaining charge level values and issuing charge level alerts may be performed continuously or periodically. Preferably, the charge level value is sent over the wireless interface periodically independent on the continuous or periodic nature of the actual charge level value obtaining process. The charge level alert is preferable issued immediately after detecting the charge level to be below a charge level alert limit.

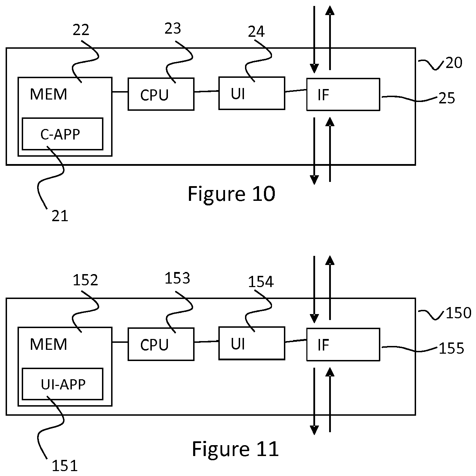

Figure 10 illustrates a simplified example block diagram of the processing device 20. The processing device 20 comprises at least one cooling control application (C-APP) 21, which can be any kind of application or a set of applications running at least partly on the user device 20. The processing device 20 may further comprise a memory 22 (MEM) for storing the cooling control application 21 and other information. The memory 22 may comprise volatile or non-volatile memory, for example EEPROM, ROM, PROM, RAM, DRAM, SRAM, firmware, programmable logic, etc. The processing device 20 may further comprise one or more processor units 23 (CPU) for running the cooling control application 21 and other applications. The processing device 20 may comprise a user interface 24 (UI) for giving instructions to the computer programs and presenting information to a user and at least one interface 25 (IF). For example, the UI 24 may comprise a display for displaying at least one of the current temperature. The display may further display one or more temperature settings, for example the target temperature and/or one or more temperature alert limits. The UI 24 may further display an indicator of the current charge level. The UI 24 may also comprise one or more input means. The input means may comprise an input panel comprising pushbuttons, which allow for example switching on the processing device 20 and/or the portable cooling system and/or adjusting the target temperature. The processing device 20 may limit the target temperature value or the upper limit of the target temperature range to a predefined maximum allowed temperature value. Preferably, the UI 24 will not allow manually setting a target temperature value above this predefined maximum allowed temperature value. For example, the predefined maximum allowed temperature value may equal 25 °C.

The cooling control application (C-APP) 21 runs on the processor 23 of the processing device 20. The cooling control application (C-APP) 21 obtains current temperature values from the temperature sensor 30 and controls operation of the micro-compressor 10 and the fans 11, 12 to control the temperature as known in the art.

The UI 24 in the processing device 20 may be configured to provide a UI for defining temperature settings for the cooling control application 21. The temperature settings may comprise target temperature setting and/or one or more limits for issuing temperature alerts. The temperature settings are preferably stored in the memory 22 of the processing device 20 so that the settings may be used by the cooling control application 21. There may be a predefined maximum temperature limit value defined, which defines the absolute upper limit of the target temperature value and temperature alert value settings that may be manually defined. Such absolute predefined maximum temperature value may be for example 25°C. Further, the UI 24 may be configured to enable the UI 24 to be used for defining one or more charge level limits for issuing a charge level alert. More than one charge level limits may be defined. At least one of the charge level limits may be configured to trigger adjustment of at least one target temperature value.

Figure 11 illustrates a simplified example block diagram of the remote wireless device 150. The remote wireless device 150 comprises at least one UI application (UI-APP) 151, which can be any kind of application or a set of applications running at least partly on the remote wireless device 150. The remote wireless device 150 may further comprise a memory 152 (MEM) for storing the UI application 151 and other information. The memory 152 may comprise volatile or non-volatile memory, for example EEPROM, ROM, PROM, RAM, DRAM, SRAM, firmware, programmable logic, etc. The remote wireless device 150 may further comprise one or more processor units 153 (CPU) for running the UI application 151 and other applications. The processing device 150 may comprise a user interface 24 (UI) for giving instructions to the computer programs and presenting information to a user and at least one interface 155 (IF). In addition, the remote wireless device 150 may comprise various input/output and other components like a battery, microphone, speakers, display typical for example for a smart phone or a tablet device which are not illustrated in Figure 11. The remote wireless device 150 may also comprise vibrator configured for providing haptic signals. Haptic signals may be particularly useful for further improving noticeability of temperature and/or charge level alerts.

The UI application 151 running in the remote wireless device 150 may provide a user interface functionality towards the cooling control application 21. The UI application 151 may provide UI for defining temperature settings for the cooling control application 21. The temperature settings may comprise target temperature setting and one or more limits for issuing temperature alerts. The temperature settings may be wirelessly communicated towards the cooling control application 21 and subsequently stored in the memory 22 of the processing device 20 so that the settings may be used by the cooling control application 21. Further, the UI application 151 may be configured to enable the UI 154 to be used for defining one or more limits for issuing a charge level alert. The charge level limit values may be communicated wirelessly the processing device 20 and stored in the memory 22 for use by the cooling control application 21. More than two of temperature level limits may be defined. For example, upper and/or lower temperature limits may be defined for comfortable, uncomfortable and for dangerous temperatures, which temperature limits may trigger different levels of temperature alerts.

The cooling control application 21 is preferably configured to provide information of the current temperature detected by the temperature sensor. The temperature information provided by the cooling control application 21 may be displayed by the UI 24 of the processing device 20 and/or, after communicating the temperature information to the remote wireless device 150, by the UI 154 of the remote wireless device 150. The UI application 151 may control displaying the temperature information in the UI 154. When the current detected temperature either exceeds an upper temperature limit value or falls below a lower temperature limit value, the cooling control application 21 issues a temperature alert. This temperature alert may be displayed in the UI 24. Preferably, the temperature alert is wirelessly communicated towards the remote wireless device 150 for indicating the alert to a user. The alert may be indicated in a user interface (24, 154) in various ways, including but not limited to a visual alert signal, an audio alert signal and a haptic alert signal, or any combination of these. If more than one temperature level limits have been defined, these may trigger more than one temperature level alerts having different severity levels.

The cooling control application 21 is preferably configured to provide information of the battery charge level detected from the battery 40. The charge level may be displayed in the UI 24 of the processing device 20 and/or after communicating the charge level information to the remote wireless device 150, in the UI 154 of the remote wireless device 150. The UI application 151 may control displaying the charge level in the UI 154. When the charge level of the battery falls below a preset charge level value the cooling control application 21 issues a charge level alert. The charge level alert may be displayed in the UI 24. Preferably, the charge level alert is wirelessly communicated towards the remote wireless device 150 for indicating the alert to a user. The charge level alert may be indicated in a user interface (24, 154) in various ways, including but not limited to a visual alert signal, an audio alert signal and a haptic alert signal, or any combination of these. If more than one charge level limits have been defined, these may trigger more than one charge level alerts having different severity levels. Different severity level charge level alerts thus indicate more or less severe risk of not being able to maintain the wanted temperature in the animal enclosure due to forthcoming or expected exhaustion of the battery. The charge level alert may further comprise information on estimated remaining lifetime of the battery.

At least one charge level alert may further trigger adjusting the target temperature setting into the predefined maximum allowed temperature value. Increasing the target temperature setting to the predefined maximum temperature value beneficially increases the life time of the battery by reducing power consumption required for maintaining the set target temperature.

It is apparent to a person skilled in the art that as technology advanced, the basic idea of the invention can be implemented in various ways. The invention and its embodiments are therefore not restricted to the above examples, but they may vary within the scope of the claims.

## Claims

1. A portable cooling system configured for controlling temperature in a semi-closed animal enclosure comprising:
- a cooling device including a micro-compressor, wherein the cooling device is configured to adjust temperature within the semi-closed animal enclosure;
- at least one fan;
- at least one temperature sensor configured to detect current temperature within the semi-closed animal enclosure;
- a processing device configured to control the operation of the micro-compressor based on a comparison of the current temperature and at least one set target temperature value;
- at least one wireless transceiver configured to provide wireless communication between the processing device and a remote wireless device; and
- at least one dedicated energy source configured to provide energy only to the portable cooling system for running the micro-compressor, the at least one fan, the at least one temperature sensor, the processing device and the at least one wireless transceiver, wherein the at least one dedicated energy source comprises a battery;
**characterized in that** the processing device is further configured to supervise the battery, and wherein the supervising the battery comprises:
- obtaining information of a charge level of the battery;
and wherein the supervising further comprises at least one of:
- providing the obtained charge level to be displayed in a user interface;
- issuing a charge level alert, when the obtained charge level of the battery falls below a set charge level limit value; and
- providing an estimate of remaining operation time based on the obtained charge level.

2. The portable cooling system of claim 1, wherein the at least one energy source further comprises a solar panel.

3. The portable cooling system of claim 1, wherein the processing device is further configured to adjust at least one target temperature value into a predefined maximum target temperature value in response to detecting the obtained charge level to fall below the set charge level limit value.

4. The portable cooling system of any of claims 1 to 3, wherein the processing device is further configured to supervise the temperature within the semi-closed animal enclosure, wherein the supervising the temperature comprises at least one of:
- providing information of the current temperature detected by the temperature sensor to the remote wireless device; and
- issuing a temperature alert to the remote wireless device, when the detected current temperature rises above a set temperature limit value.

5. The portable cooling system of any of claims 1 to 4, configured to be removably installed to the structure of a semi-closed animal enclosure.

6. The portable cooling system of any of claims 1 to 5, wherein the semi-closed animal enclosure is configured to be disposed inside a vehicle, and the portable cooling system further comprises at least one first tube coupled to a first outlet of the portable cooling system and configured to transport heat away from the vehicle, wherein the first outlet comprises a first fan configured to push warm air coming out from the first outlet into the at least one first tube.

7. The portable cooling system of any of claims 1 to 6, wherein the portable cooling system further comprises at least one second tube coupled to a second outlet the portable cooling system, wherein the second outlet comprises a second fan configured to push cool air into the at least one second tube, and wherein the at least one second tube is configured to lead the cool air into the semi-closed animal enclosure.

8. The portable cooling system of any of claims 1 to 7, further comprising an AC power input configured to be plugged to the mains and an AC DC converter.

9. A method for operating a portable cooling system configured for controlling temperature in a semi-closed animal enclosure comprising:
- adjusting temperature within the semi-closed animal enclosure with a cooling device including a micro-compressor;
- moving air with at least one fan;
- detecting temperature within the semi-closed animal enclosure with at least one temperature sensor;
- controlling the operation of the micro-compressor based on comparison of the detected temperature and at least one set target temperature value;
- communicating wirelessly between the processing device and a remote wireless device; and
- providing energy for running the micro-compressor, the at least one temperature sensor, the at least one fan, the processing device and the at least one wireless transceiver by at least one dedicated energy source configured to provide energy only to the portable cooling system, wherein the dedicated energy source comprises at least a battery;
**characterized in that** the method further comprises supervising the battery, wherein the supervising the battery comprises obtaining information of a charge level of the battery, and wherein the supervising further comprises at least one of:
- providing the obtained charge level to be displayed in a user interface;
- issuing a charge level alert, when the obtained charge level of the battery falls below a set charge level limit value; and
- providing an estimate of remaining operation time based on the obtained charge level.

10. The method of claim 9, further comprising
- adjusting at least one target temperature value into a predefined maximum target temperature value in response to detecting the obtained charge level falling below the set charge level limit value.

11. The method of claim any of claims 9 to 10, wherein the method further comprises supervising the temperature within the semi-closed animal enclosure by at least one of:
- providing information of the current temperature detected by the temperature sensor; and
- issuing a temperature alert, when the detected current temperature rises above a set temperature limit value.

12. The method of any of claims 9 to 11, wherein the method further comprises transporting heat away from a first outlet of the portable cooling device by a first fan and at least one first tube, wherein the first fan is configured to push warm air coming out from the first outlet into at least one first tube.

13. The method of any of claims 9 to 12, wherein the method further comprises leading cool air into the semi-closed animal enclosure by a second fan and at least one second tube, wherein the second fan is configured to push cool air coming out from a second outlet of the portable cooling device into the at least one second tube.
